# EUROPÄISCHE PATENTSCHRIFT

(11) **EP 1 268 648 B1**
(45) Veröffentlichungstag und Bekanntmachung des Hinweises auf die Patenterteilung: **07.09.2005**
(21) Anmeldenummer: 01911668.0
(22) Anmeldetag: 21.02.2001
(51) Int. Cl.: C08K 5/523, C08K 5/5313, C08K 3/34, C08L 69/00

(54) **FLAMMWIDRIGE POLYCARBONAT-FORMMASSEN**
FLAME-RESISTANT POLYCARBONATE MOULDING COMPOUNDS
MATIERES DE MOULAGE A BASE DE POLYCARBONATE IGNIFUGES

(30) Priorität: 06.03.2000 DE 10010941
(43) Veröffentlichungstag der Anmeldung: 02.01.2003
(73) Patentinhaber: Bayer MaterialScience AG, 51368 Leverkusen (DE)
(72) Erfinder: SEIDEL, Andreas, 41542 Dormagen (DE); ECKEL, Thomas, 41540 Dormagen (DE); KELLER, Bernd, 47608 Geldern (DE); WITTMANN, Dieter, 51375 Leverkusen (DE)
(86) Internationale Anmeldenummer: PCT/EP2001/001925
(87) Internationale Veröffentlichungsnummer: WO 2001/066635

(56) Entgegenhaltungen:
- EP-A- 0 391 413
- EP-A- 0 754 531
- WO-A-99/43747
- DE-A- 19 734 661
- DE-A- 19 801 198
- DE-A- 19 914 139
- DE-A- 19 960 316

## Beschreibung

Die vorliegende Erfindung betrifft schlagzähmodifizierte Polycarbonat-Zusammensetzungen mit einem niedrigen Fluorgehalt, die sich durch eine ausgezeichnete Flammwidrigkeit auch bei dünnen Wandstärken sowie eine aussergewöhnlich gute Chemikalien- und Wärmeformbeständigkeit auszeichnen.

Chlor- und bromfrei flammwidrig ausgerüstete, schlagzähmodifizierte Polycarbonatformmassen sind bekannt.

EP-A 0 345 522 beschreibt Polymermischungen aus aromatischem Polycarbonat, ABS-Pfropfpolymerisat und/oder styrolhaltigem Copolymer, die mit Monophosphorsäureestern flammwidrig ausgerüstet sind. Die Polymermischungen enhalten desweiteren als Antitropfmittel Teflon in einer Konzentration von 0,3 Gew.-%.

In US-A 5,204,394 und 5,672,645 werden PC/ABS-Formmassen beschrieben, die durch Oligophosphorsäureester bzw. Mischungen aus Oligo- und Monophosphorsäureester flammwidrig ausgerüstet sind. Als Antitropfinittel enhalten die beschriebenen Formmassen ebenfalls Teflon, welches in Konzentrationen von 0,2 bis 0,5 Gew.-Teilen bezogen auf 100 Gew.-Teile der Formmasse ohne Teflon zum Einsatz kommt.

In JP-A 111 997 68 werden PC/ABS-Blends beschrieben, die mit monomeren und oligomeren Phosphorsäureestern flammwidrig ausgerüstet sind, wobei die Flammwidrigkeit durch Zusatz eines anorganischen Füllstoffs, wie z.B. Talk deutlich verbessert wird. Um ein brennendes Abtropfen zu verhindern, müssen auch diesen Formmassen Teflon in Konzentrationen von 0,2 bis 0,5 Gew.-Teilen bezogen auf 100 Gew.-Teile PC + ABS zugesetzt werden. In allen Fällen entspricht dieses einer Teflonkonzentration von >0,15 Gew.-%. JP-A 111 997 68 offenbart auch eine flammwidrige PC/ABS-Formmasse basierend auf Triphenylphosphat als Flammschutzmittel, welche eine V-0-Bewertung im UL94V-Test auch ohne Zusatz von Teflon erreicht. Diese Formmasse enthält stabilisierten roten Phosphor und größere Mengen Talk, welche sich sehr nachteilig auf die mechanischen Eigenschaften sowie die Eigenfarbe des Polymerblends auswirken.

US-A 5 849 827 beschreibt PC/ABS-Formmassen, die mit Resorcinol-basierendem Oligophosphat flammwidrig ausgerüstet sind, wobei die Nachbrennzeiten durch Zusatz nanoskaliger anorganischer Materialien in kleinen Konzentrationen deutlich reduziert werden. Die Erfahrung zeigt, dass die Neigung zum brennendem Abtropfen durch die Nanopartikel nicht reduziert wird, so dass der Zusatz von Antitropfmitteln, wie z.B. Teflon weiterhin notwendig ist, um eine V-0-Bewertung im UL94V-Test zu realisieren.

In WO 99/07782 werden PC/ABS-Formmassen beschrieben, die mit einem speziellen, vom Bisphenol-A abgeleiteten Oligophosphat flammwidrig ausgerüstet sind und zusätzlich synergistische Mengen einer nanoskaligen anorganischen Verbindung enthalten. Die Formmassen zeichnen sich durch ein verbessertes ESC-Verhalten und eine hohe Wärmeformbeständigkeit aus. Die Formmassen enthalten Teflon in einer Konzentration von 0,35 %.

In EP-A 0 754 531 werden unter anderem auch flammwidrige PC/ABS-Formmassen beschrieben, die mit Oligophosphaten des Bisphenol-A-Typs oder dessen methylsubstituierten Derivaten flammwidrig ausgerüstet sind und schuppenförmige Füllstoffe wie Glimmer und/oder Glasschuppen ggf. auch in Kombination mit Glasfasern enthalten. Die beschriebenen Formmassen enthalten kein Teflon. Sie zeichnen sich aus durch hohe Steifheit und Dimensionsstabilität (Verzugsarmut) und zeigen eine vernachlässigbare Belagsbildung beim Spritzguss. Informationen zur Güte der Flammwidrigkeit der PC/ABS-Formmassen, insbesondere zur Neigung zum brennendem Abtropfen, werden nicht offenbart. Der hohe Gehalt an anorganischen Füllstoffen der beschriebenen Formmassen wirkt sich negativ auf einige mechanische Eigenschaften aus. So resultiert z.B. ein für viele Anwendungen unzureichendes Zähigkeitsniveau.

In einigen Kunstoffanwendungsbereichen, insbesondere in einigen Gebieten der Elektro- und Elektronikindustrie bestehen aus sicherheitstechnischen Gründen kundenseitige oder gar gesetzliche Forderungen für eine Beschränkung nicht nur des Chlor- und Brom-, sondern auch des Fluorgehalts. So gilt z.B. gemäß der DIN/VDE-Norm 0472, Teil 815 ein Material nur dann als "halogenfrei", wenn die Massenanteile für die Halogene Chlor, Brom und Jod, berechnet als Chlor ≤ 0,2 % sind und ausserdem der Massenanteil für Fluor ≤ 0,1 % ist.

WO 99/57198 beschreibt PC/ABS-Formmassen, die mit einem Resorcinol-abgeleiteten Oligophosphat (RDP) flammwidrig ausgerüstet sind und aufgrund ihres niedrigen Teflongehaltes von nur 0,1 - entsprechend einem Fluorgehalt von 0,076 % - als halogenfrei gemäß VDE/DIN 0472, Teil 815 einzustufen sind. Derartige Formmassen weisen allerdings ein schlechtes ESC-Verhalten und eine unzureichende Wärmeformbeständigkeit sowie eine, insbesondere für Extrusionsanwendungen oft unzureichende Schmelzestabilität auf.

Aufgabe der vorliegenden Erfindung war die Bereitstellung einer mit der VDE/DIN-Norm 0472, Teil 815 konformen Formmasse mit einem Fluorgehalt von ≤ 0,1 %, welche sich durch eine ausgezeichnete Flammwidrigkeit, gute mechanische Eigenschaften, eine verbesserte Wärmeformbeständigkeit und ein verbessertes ESC-Verhalten auszeichnet, und welche aufgrund ihrer rheologischen Eigenschaften (Schmelzeviskosität und -stabilität) auch für Extrusionsanwendungen einsetzbar ist.

Es wurde nun gefunden, dass schlagzähmodifizierte Polycarbonat-Zusammensetzungen, die mit speziellen, vom Bisphenol-A abgeleiteten Oligophosphaten flammwidrig ausgerüstet sind und optional zusätzlich kleine Mengen anorganischer Materialien enthalten, das gewünschte Eigenschaftsprofil erfüllen.

Gegenstand der vorliegenden Erfindung sind somit Polycarbonat-Zusammensetzungen enthaltend
70 bis 95 Gew.-% mindestens eines aromatischen Polycarbonats, 4,67 bis 10 Gew.-% mindestens eines Pfropfpolymerisats als Schlagzähmodifikator und als Flammschutzmittel 2 bis 15 Gew.-% eines Bisphenol-A-basierendes Oliphosphats der Formel 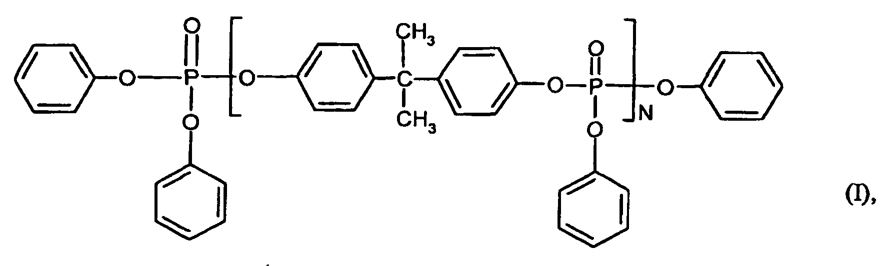 mit N zwischen 1,1 und 5,
wobei die Formmassen dadurch gekennzeichnet sind, dass sie konform mit der VDE/DIN-Norm 0472, Teil 815 sind, d.h. dass sie ≤0,1 Gew.-% Fluor und ≤ 0,2 Gew.-% Chlor, Brom und Iod bezogen auf die Gesamtzusammensetzung enthalten.

Optional können die Zusammensetzungen zusätzlich enthalten
D) eine fluorierte polyolefinische Verbindung als Antitropfinittel,
E) eine weitere Polymerkomponente,
F) ein anorganisches Material und
G) übliche Polymeradditive wie z.B. Antitropfmittel, Gleit- und Entformungsmittel, Nukleiermittel, Antistatika, Stabilisatoren, Farbstoffe und Pigmente.

Die erfindungsgemäßen Zusammensetzungen sind weiterhin dadurch gekennzeichnet, dass den UL94V-Test mit der Bewertung V-O, bevorzugt bei Wandstärken ≤ 1,55 mm bestehen.

Der Fluorgehalt wird bevorzugt mittels dem photometrischen Analysenvefahren bestimmt, wie es in der DIN/VDE-Norm 0472, Teil 815 beschrieben wird.

Bevorzugte Formmassen enthalten
A) 75 bis 90 Gew.-Teile mindestens eines aromatischen Polycarbonats,
B) 4,67 bis 10 Gew.-Teile mindestens eines Pfropfpolymerisats mit Kautschukgrundlage,
C) 2 bis 15 Gew.-Teile eines Bisphenol-A-basierendem Oligophosphat,
D) 0 bis 0,13 Gew.-Teile Teflon,
   und
E) 0 bis 20 Gew.Teile, bevorzugt 0 bis 10 Gew.-Teile, insbesondere 0 bis 5 Gew.-Teile eines Vinyl(co)polymerisats oder Polyalkylenterephthalats oder Mischungen hieraus,
F) 0 bis 5 Gew.-Teile, bevorzugt 0 bis 3 Gew.-Teile, insbesondere 0 bis 1,5 Gew.-Teile eines feinteiligen partikel-, schuppen- oder faserförmigen anorganischen Materials,
wobei die Summe der Gewichtsteile aller Komponenten (A bis F sowie gegebenenfalls weiterer Bestandteile) 100 ergibt.

Ganz besonders bevorzugte Polycarbonat-Zusammensetzungen zeichnen sich dadurch aus, dass sie bei Wandstärken < 1,6 mm den UL 94V-Test mit der Bewertung V-O bestehen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (II) 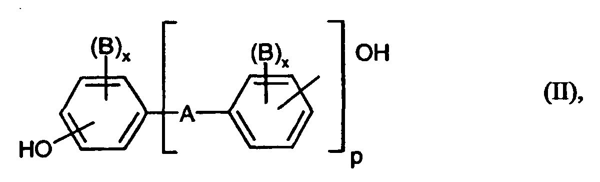 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (III) oder (IV) 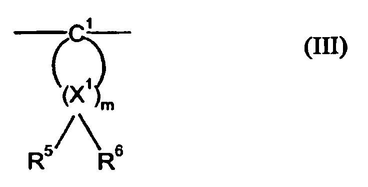 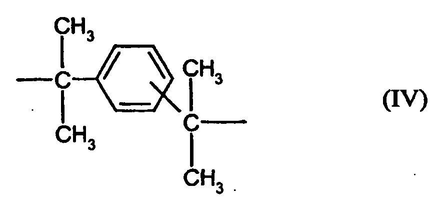
- B: jeweils C₁-C₁₂-Alkyl, vorzugsweise Methyl,
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol und p-tert.-Butylphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{W}, gemessen z. B. durch Ultrazentrifuge oder Streulichtmessung) von 10 000 bis 200 000 g/mol.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-heptan, 2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, bevorzugt im Bereich 1,26 bis 1,4, insbesondere im Bereich 1,28 bis 1,35 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemischen miteinander eingesetzt werden.

### Komponente B

Die Komponente B umfasst ein oder mehrere Pfropfpolymerisate von
- B.1: 5 bis 95, vorzugsweise 30 bis 90 Gew.-%, wenigstens eines Vinylmonomeren auf
- B.2: 95 bis 5, vorzugsweise 70 bis 10 Gew.% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B.1 sind vorzugsweise ein Gemisch aus
- B.1.1: 50 bis 99 Gew.-Teilen Vinylaromaten und/oder kernsubstituierten Vinylaromaten (wie beispielsweise und bevorzugt Styrol, α-Methylstyrol, p-Methylstyrol) und/oder Methacrylsäure-(C₁-C₈)-Alkylester (wie z.B. und bevorzugt Methylmethacrylat, Ethylmethacrylat) und
- B.1.2: 1 bis 50 Gew.-Teilen Vinylcyanide (ungesättigte Nitrile wie beispielsweise und bevorzugt Acrylnitril und Methacrylnitril) und/oder (Meth)Acrylsäure-(C₁-C₈)-Alkylester (wie z.B. und bevorzugt Methylmethacrylat, n-Butylacrylat, t-Butylacrylat) und/oder Derivate (wie beispielsweise und bevorzugt Anhydride und Imide) ungesättigter Carbonsäuren (beispielsweise und bevorzugt Maleinsäureanhydrid und/oder N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, sowie Acrylat-, Polyurethan-, Silikon-, und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise <0°C, besonders bevorzugt <-10°C liegt.

Besonders bevorzugt ist reiner Polybutadienkautschuk.

Besonders bevorzugte Polymerisate B sind ABS-Polymerisate (Emulsions-, Masse- und Suspensions-ABS), wie sie z.B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Besonders bevorzugt als Komponente B ist Emulsions-ABS.

Geeignete Pfropfkautschuke sind insbesondere auch solche ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Als Flammschutzmittel enthalten die erfindungsgemäßen Formmassen eine oder mehrere Phosphorverbindungen der Formel (I) 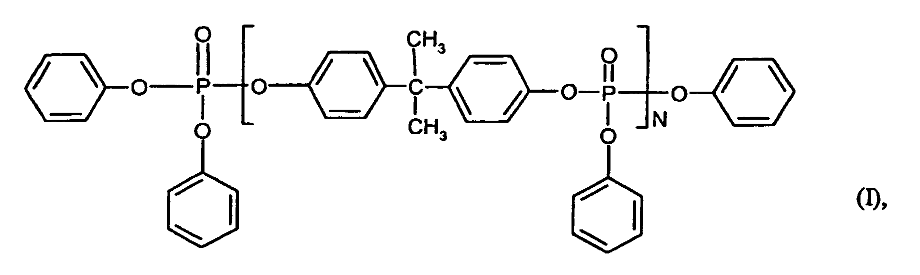 mit N zwischen 1,1 und 5.

Die erfindungsgemäß geeigneten Phosphorverbindungen gemäß Komponente C sind bekannt (s. beispielsweise Ullmanns Encyklopädie der Technischen Chemie, Bd. 18, S. 301 ff. 1979; Houben-Weyl, Methoden der Organischen Chemie, Bd. 12/1, S. 43; Beilstein, Bd. 6, S. 177).

Die gemittelten N-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für N berechnet werden.

### Komponente D

Als Komponente D können die erfindungsgemäßen Zusammensetzungen auch fluorierte Polyolefine als Antitropfmittel enthalten. Allerdings darf die Menge des zugesetzten fluorierten Polyolefins nur so gering sein, dass die Anforderungen der DIN/VDE-Norm 0472, Teil 815 erfüllt bleiben, d.h. der Fluorgehalt der Gesamtzusammensetzung darf 0,1 Gew.-% nicht übersteigen.

Fluorierte Polyolefine sind allgemein bekannt (vgl. z.B. EP-A 640 655). Handelsübliches Produkt ist beispielsweise Teflon® 30 N von der Firma DuPont.

Die fluorierten Polyolefine können auch in Form einer koagulierten Mischung von Emulsionen der fluorierten Polyolefine mit Emulsionen der Pfropfpolymerisate (B) oder mit einer Emulsion eines Copolymerisats vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat (B) oder einem Copolymerisat auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 - 95 Gew.%, vorzugsweise 7 bis 60 Gew.-%.

### Komponente E

Die erfindungsgemäßen Zusammensetzungen können als Komponente (E) auch weitere Polymere enthalten.

Geeignet sind bevorzugt Vinyl(co)Polymerisate (E.1) von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- E.1.1: 50 bis 99, vorzugsweise 60 bis 90 Gew.-Teilen Vinylaromaten und/oder kernsubstituierten Vinylaromaten wie beispielsweise und bevorzugt Styrol, α-Methylstyrol, p-Methylstyrol) und/oder Methacrylsäure-(C₁-C₈)-Alkylester wie z.B. und bevorzugt Methylmethacrylat, Ethylmethacrylat), und
- E.1.2: 1 bis 50, vorzugsweise 10 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. und bevorzugt Methylmethacrylat, n-Butylacrylat, t-Butylacrylat) und/oder ungesättigte Carbonsäuren (wie beispielsweise und bevorzugt Maleinsäure) und/oder Derivate (wie beispielsweise und bevorzugt Anhydride und Imide) ungesättigter Carbonsäuren (beispielsweise und bevorzugt Maleinsäureanhydrid und/oder N-Phenyl-Maleinimid).

Die (Co)Polymerisate E.1 sind harzartig, thermoplastisch und kautschukfrei.

Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente E.1 besitzen vorzugsweise Molekulargewichte M_{W} (Gewichtsmittel, ermittelt durch Lichtstreuung oder Sedimentation) zwischen 15 000 und 200 000.

Geeignet sind weiterhin Polyalkylenterephthalate (E.2) wie sie in EP-A-841 187 beschrieben sind.

Bevorzugt sind Polyalkylenterephthalate, die aus Terephthalsäure und/oder deren reaktionsfähigen Derivaten (z.B. deren Dialkylestern) und Ethylenglykol und/oder Butandiol-1,4 hergestellt worden sind, und Mischungen dieser Polyalkylenterephthalate.

### Komponente F

Desweiteren können der Polycarbonatzusammensetzung anorganische Materialien zugesetzt werden, insbesondere solche die die Schmelzestabilität aufgrund eines thixotropen Effektes verbessern und in solchen Mengen, dass sie sich auf die mechanischen Eigenschaften des Materials positiv oder zumindest nicht negativ auswirken. In Frage kommen hierfür prinzipiell alle feinvermahlenen anorganischen Materialien. Diese können z.B. partikel-, schuppenronnigen oder faserförmigen Charakter haben. Beispielhaft seien an dieser Stelle genannt Kreide, Quarzpulver, Titandioxid, Silikate/Aluminosilikate wie z.B. Talk, Wollastonit, Glimmer/Tonschichtmineralien, Montmorillonit, insbesondere auch in einer durch Ionenaustausch modifizierten, organophilen Form, Kaolin, Zeolithe, Vermiculit sowie Aluminiumoxid, Silica, Magnesiumhydroxid, Aluminiumhydroxid und Glasfasern/Glasschuppen. Es können auch Mischungen verschiedener anorganischer Materialien zum Einsatz kommen.

Die anorganischen Materialien können oberflächenbehandelt, z.B. silanisiert sein, um eine bessere Polymerverträglichkeit zu gewährleisten.

Die anorganischen Materialien kommen in Konzentrationen von 0 bis 5 Gew.-%, bevorzugt von 0 bis 3 Gew.-%, insbesondere von 0 bis 1,5 Gew.-% bezogen auf die Gesamtzusammensetzung zum Einsatz.

Bevorzugt kommen anorganische Materialien mit schuppenförmigen Charakter zum Einsatz, wie z.B. Talk, Glimmer/Tonschichtmineralien, Montmorillonit, insbesondere auch in einer durch Ionenaustausch modifizierten, organophilen Form, Kaolin, und Vermiculit.

Besonders bevorzugt ist Talk.

Unter Talk wird ein natürlich vorkommender oder synthetisch hergestellter Talk verstanden.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind. Auch diese verunreinigten natürlichen Talkpulver können in den erfindungsgemäßen Formmassen zum Einsatz kommen, bevorzugt sind jedoch Talktypen hoher Reinheit. Diese sind gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzute Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz von Talk in Form von feinvermahlenen Typen mit einer mittleren größten Teilchengröße d₅₀ von < 20 µm, bevorzugt < 10 µm, besonders bevorzugt <5 µm, ganz besonders bevorzugt ≤ 2,5 µm.

Als bevorzugte anorganische Komponente seien desweiteren genannt feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe und 4. bis 8. Nebengruppe, besonders bevorzugt aus der 3. bis 5. Hauptgruppe und 4. bis 8. Nebengruppe mit den Elementen Sauerstoff, Schwefel, Bor, Phosphor, Kohlenstoff, Stickstoff, Wasserstoff und/oder Silizium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und Hydride.

Besonders bevorzugte feinstteilige anorganische Verbindungen sind beispielsweise TiN, TiO₂, SnO₂, WC, ZnO, Al₂O₃, AlO(OH), ZrO₂, SiO₂, Eisenoxide, BaSO₄, Vanadiumoxide, Zinkborat, Silikate wie Al-Silikate, Mg-Silikate. Mischungen und/oder dotierte Verbindungen können ebenfalls verwendet werden. Die nanoskaligen Partikel können mit organischen Molekülen oberflächenmodifiziert sein.

Insbesondere bevorzugt is nanoskaliges AlO(OH).

Die durchschnittlichen Teilchendurchmesser der nanoskaligen anorganischen Materialien sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser d₅₀, ermittelt durch Ultrazentrifugenmessungen nach W. Scholtan et al., Kolloid-Z. und Z. Polymere 250 (1972), S. 782 bis 796.

Die nanoskaligen anorganischen Verbindungen können als Pulver, Pasten, Sole, Dispersionen oder Suspensionen vorliegen. Durch Fällung können aus Dispersionen, Sole oder Suspensionen Pulver erhalten werden.

### Komponente G

Die erfindungsgemäßen Formmassen können weitere übliche Additive, wie z.B. von Komponente (D) verschiedene Antitropfinittel, von Komponente (C) verschiedene Flammschutzmittel, Gleit- und Entformungsmittel, Nukleiermittel, Antistatika, Stabilisatoren, Farbstoffe und Pigmente in einer wirksamen Konzentration enthalten.

Die erfindungsgemäßen Formmassen enthaltend die Komponenten A-G und gegebenenfalls weitere Zusätze, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Flammwidrigkeit sowie ihrer guten mechanischen Eigenschaften und ihres guten Verarbeitungsverhaltens zur Herstellung von Formkörpern jeglicher Art, insbesondere natürlich von solchen, für die Konformität mit DIN/VDE-Norm 0472, Teil 815 gefordert wird. Die Formkörper können nach den bekannten Verfahren hergestellt werden, z.B. durch Spritzguss und Extrusion.

Die erfindungsgemäßen Formmassen eignen sich aufgrund ihrer rheologischen Eigenschaften insbesondere auch für die Herstellung von Platten, Profilen und Formkörpern im Extrusions-, Extrusionsblas- und Tiefziehverfahren.

Beispiele für herstellbare Formkörper sind: Gehäuseteile jeder Art, z.B. für Haushaltsgeräte wie Saftpressen, Kaffeemaschinen, Mixer; für Elektromotoren wie in Rasenmähern, Bohrmaschinen, etc. sowie für Büromaschinen, wie Monitore, (tragbare) Computer, Drucker und Kopierer. Weitere mögliche Einsatzgebiete sind Abdeckplatten, Fenster-/Türprofile sowie Elektroinstallationskanäle/-rohre, Kabelleiter und Verdrahtungskanäle, Stromschienenabdeckungen sowie Formteile, Extrusionsprofile oder Platten für den Kfz-/Schienenfahrzeug-/Flugzeug-Sektor (z.B. Innenverkleidungen). Die Formmassen sind außerdem auf dem Gebiet der Elektrotechnik z.B. für Schalter, Steckdosen und Platinen sowie für Verteiler- und Stromzählerkästen einsetzbar.

Gegenstand der Erfindung sind ebenfalls Verfahren zur Herstellung der Zusammensetzung, Verwendung der Zusammensetzung zur Herstellung von Formkörpern sowie die Formkörper selbst.

### Beispiele

### Komponente A

Verzweigtes Polycarbonat auf Basis Bisphenol A mit einer relativen Lösungsviskosität von 1,32 gemessen in Methylenchlorid bei 25°C und in einer Konzentration von 0,5 g/100 ml.

### Komponente B

Pfropfpolymerisat, hergestellt durch Emulsionspolymerisation, von 45 Gew.-Teilen Styrol und Acrylnitril im Verhältnis von 72:28 auf 55 Gew.-Teilen eines teilchenförmigen vernetzten Polybutadienkautschuks (mittlerer Teilchendurchmesser d₅₀ = 0,3 bis 0,4 µm).

### Komponente C.1

### Bisphenol-A-basierendes Oligophosphat

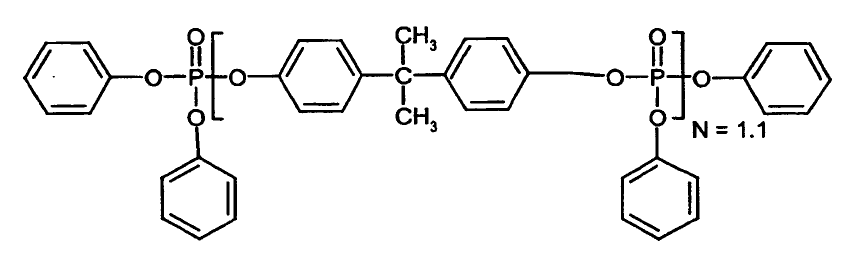

### Komponente C.2

### Resorcinol-basierendes Oligophosphat (Vergleich)

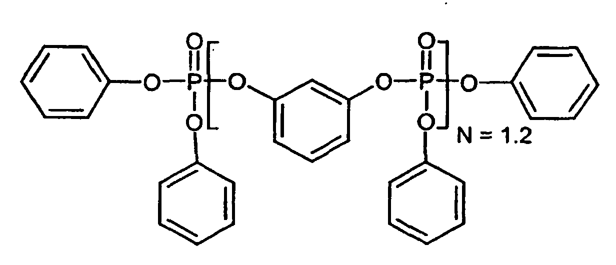

Zur Bestimmung der angegebenen zahlengemittelten N-Werte der Komponenten C.1 und C.2 wurden zuerst die Anteile der oligomeren Phosphate durch HPLC-Messungen bestimmt:

| | |
|---|---|
| Säulentyp | LiChrosorp RP-8 |
| Elutionsmittel im Gradienten | Acetonitril/Wasser 50:50 bis 100:0 |
| Konzentration | 5 mg/ml |

Aus den Anteilen der einzelnen Komponenten (Mono- und Oligophosphate) wurden dann nach bekannten Verfahren die zahlengewichteten N-Mittelwerte berechnet.

### Komponente D.1

Das Polytetrafluorethylen-Präparat (D.1) wird hergestellt durch Cofällung einer Mischung wässriger Emulsionen des Pfropfpolymerisats (B) und eines Tetrafluorethylenpolymerisats. Das Gewichtsverhältnis Pfropfpolymerisat (B) zum Tetrafluorethylenpolymerisat im Koagulat ist 90 Gew.-% zu 10 Gew.-%. Die Tetrafluorethylenpolymerisat-Emulsion besitzt einen Feststoffgehalt von 60 Gew.-%, der mittlere PTFE-Teilchendurchmesser liegt zwischen 0,05 und 0,5 µm. Die Pfropfpolymerisat-Emulsion besitzt einen Feststoffgehalt von 34 Gew.-% und einen mittleren Latexteilchendurchmesser von 0,3 bis 0,4 µm.

Zur Herstellung von (D.1) wird die Emulsion des Tetrafluorethylenpolymerisats (Teflon 30 N der Fa. DuPont) mit der Emulsion des Pfropfpolymerisats (B) vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente D.2

Blendex 449: Pulverförmiges PTFE-Präparat der Firma General Electric Plastics bestehend aus 50 Gew.-% PTFE enthalten in einer SAN-Copolymermatrix.

### Komponente F.1

Naintsch A3: Feinstvermahlener hochreiner Talk der Firma Naintsch Mineralwerke GmbH (Graz, Österreich).

### Komponente F.2

Pural 200: Nanoskaliges AlO(OH) mit Böhmitstruktur der Firma Condea Chemie GmbH (Hamburg, Deutschland).

### Komponente G.1

### Phosphitstabilisator

### Komponente G.2

### Pentaerythrittetrastearat als Entformungsmittel

### Herstellung und Prüfung der erfindungsgemäßen Formmassen

Das Mischen der Komponenten A bis G erfolgte auf einem ZSK 25 Laborextruder (Wemer & Pfleiderer) bei einer Massetemperatur von 260°C, einem Durchsatz von 15 kg/h und einer Schneckenrotationsfrequenz von 200 U/min. Die Formkörper wurden auf einer Spritzgießmaschine (Typ Arburg 270E) bei 260°C hergestellt.

Das Spannungsrissverhalten wird an Stäben der Abmessung 80 x 10 x 4 mm untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 0,2 bis 2,4 %) und bei Zimmertemperatur 5 Minuten im Testmedium gelagert. Die Beurteilung des Spannungsrissverhaltens erfolgt über die Randfaserdehnung, die mindestens erforderlich ist, damit der Stab innerhalb der 5-minütigen Expositionszeit im Testmedium bricht.

Die Kerbschlagzähigkeit (ak) wird bei Raumtemperatur gemäß ISO 180-1A bestimmt.

Die Vicat B 120-Temperatur wird gemäß ISO 306 mit einer Aufheizrate von 120 K/h und einer Stempellast von 50 N bestimmt.

Die Flammwidrigkeit wird gemäß UL94V beurteilt an Stäben mit einer Dicke von 1,2 und 1,5 mm.

Die Schmelzeviskosität im Niedrigscherbereich (Scherrate von 100 s⁻¹) wird bestimmt als Mass für die Schmelzestabilität bei der Extrusionsverarbeitung gemäß DIN 54811 bei 260°C.

Der MVR wird bestimmt gemäß ISO 1133 bei 260°C unter Verwendung einer Stempellast von 5 kg.

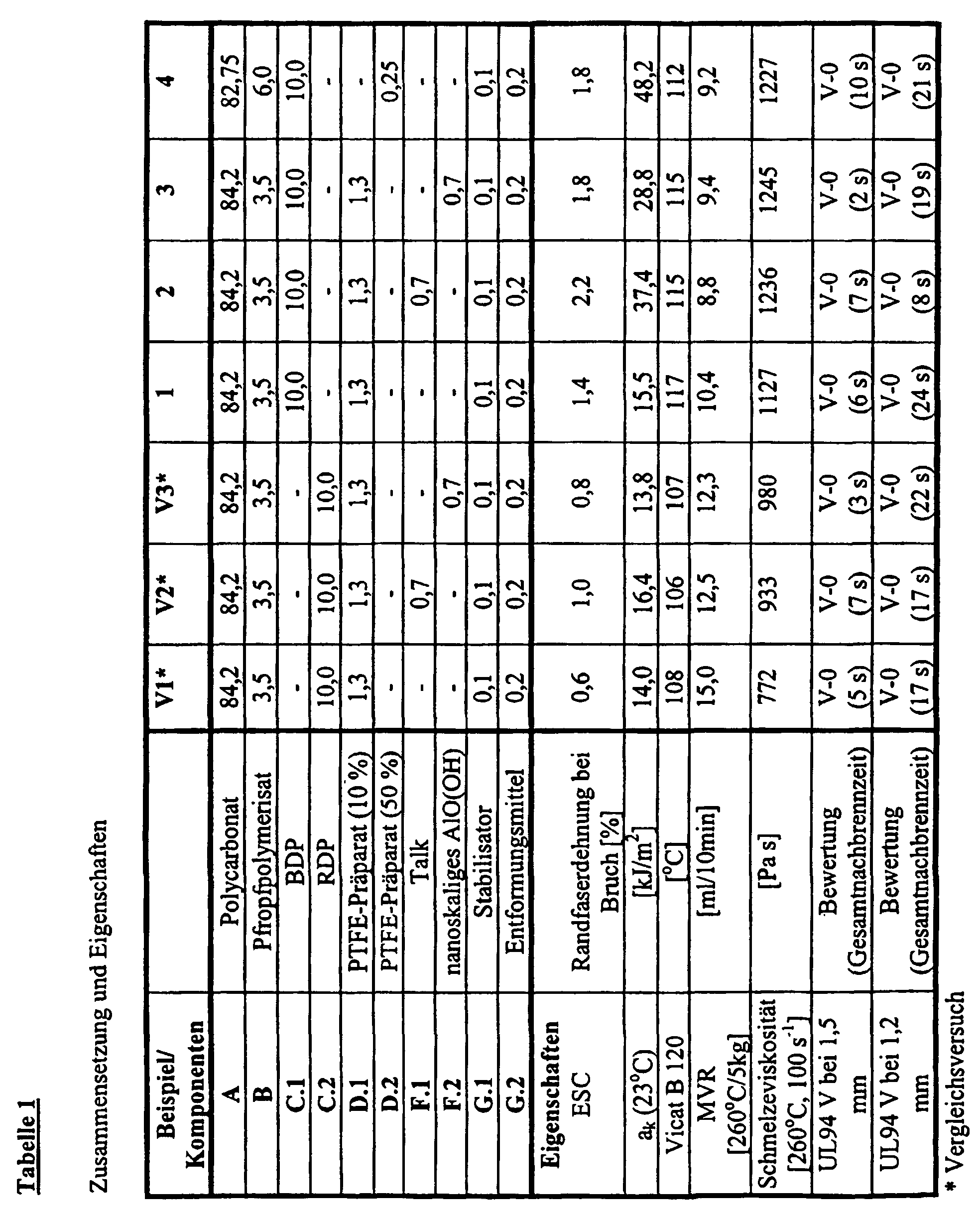

Aus Tabelle 1 geht hervor, dass durch Einsatz von Bisphenol-A-basierendem Oligophosphat (Beispiele 1-3) statt Resorcinol-basierendem Oligophosphat (Vergleichsbeispiele V1-V3).
a) eine verbesserte Wärmeformbeständigkeit,
b) ein deutlich verbessertes ESC-Verhalten,
c) ein verbessertes Kerbschlagzähigkeitsniveau und
d) im Hinblick auf Extrusionsanwendungen eine deutlich verbesserte Schmelzestabilität
erzielt werden kann. Die Flammwidrigkeit bleibt auf einem unverändert gutem Niveau. Der Teflongehalt aller Beispiele und Vergleichsbeispiele ist konform mit den Einschränkungen der DIN/VDE-Norm 0472, Teil 815.

Tabelle 1 zeigt desweiteren, dass durch Zusatz kleiner Mengen anorganischer Materialien wie z.B. Talk oder nanoskaligem AIO(OH), eine weitere Verbesserung der Kerbschlagzähigkeit, des ESC-Verhaltens und der Schmelzestabilität, beim Talk sogar auch der Flammwidrigkeit realisierbar ist. Eine entsprechende Verbesserung der mechanischen und rheologischen Eigenschaften kann aber auch ohne Zusatz anorganischer Materialien durch Erhöhung des Pfropfpolymerisatanteils erzielt werden (Beispiel 4).

## Patentansprüche

1. Zusammensetzungen enthaltend 70 - 95 Gew.-% mindestens eines aromatischen Polycarbonats, 4,67 - 10 Gew.-% mindestens eines Pfropfpolymerisats als Schlagzähmodifikator und als Flammschutzmittel 2 - 15 Gew.-% eines Bisphenol-A-basierendes Oligophosphats der Formel 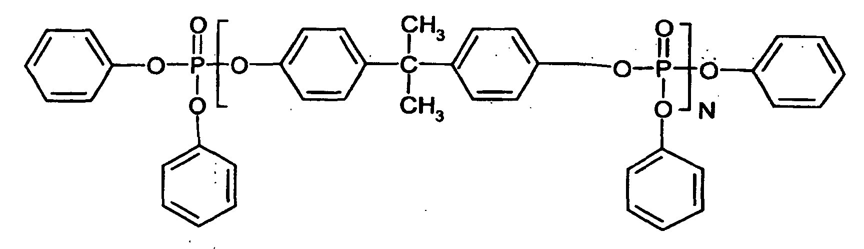 mit N zwischen 1,1 und 5, wobei die Formmassen **dadurch gekennzeichnet sind, dass** sie ≤ 0,1 Gew.-% Fluor bezogen auf die Gesamtzusammensetzung enhalten.

2. Zusammensetzungen gemäß Anspruch 1 enthaltend 0 bis 5 Gew.-% eines partikel-, schuppen- oder faserförmigen anorganischen Materials, wobei die Summe der Gew.-% der Komponenten 100 ergibt.

3. Zusammensetzungen gemäß Anspruch 1 enthaltend 0 bis 3 Gew.-% eines partikel-, schuppen- oder faserförmigen anorganischen Materials, wobei die Summe der Gew.-% der Komponenten 100 ergibt.

4. Zusammensetzungen gemäß Anspruch 1 enthaltend 0 bis 1,5 Gew.-% eines partikel-, schuppen- oder faserförmigen anorganischen Materials, wobei die Summe der Gew.-% der Komponenten 100 ergibt.

5. Zusammensetzungen gemäß Anspruch 1 bis 4 enthaltend zusätzlich ein fluoriertes Polyolefin, gegebenenfalls eingesetzt als Koagulat, Präcompound oder Masterbatch mit einem Pfropfpolymerisat oder einem Vinyl(co)polymerisat, in einer Menge, dass der Fluorgehalt der Zusammensetzung ≤ 0,1 Gew.-% beträgt.

6. Zusammensetzungen gemäß Anspruch 1 bis 5 enthaltend zusätzlich Vinyl(co)polymerisate, Polyalkylenterephthalate oder Mischungen daraus.

7. Zusammensetzungen gemäß Anspruch 1 bis 6 enhaltend als Schlagzähmodifikator ein oder mehrere Pfropfpolymerisate von 5 bis 95 Gew.-% wenigstens eines Vinyl monomeren auf 95 bis 5 Gew.-% mindestens einer Pfropfgrundlage mit einer Glastemperatur < 10 °C.

8. Zusammensetzungen gemäß Anspruch 7 mit Pfropfpolymerisaten auf der Grundlage von Dien-, EP(D)M-, Acrylat- oder Silikonkautschuken.

9. Zusammensetzungen gemäß Anspruch 7 enthaltend ein Emulsions- oder Masse-ABS oder Mischungen daraus als Schlagzähmodifikator.

10. Zusammensetzungen gemäß Anspruch 1 bis 9 enhaltend weitere handelsübliche Additive, wie z.B. weitere Antitropfmittel, weitere Flammschutzmittel, Gleit- und Entformungsmittel, Nukleirmittel, Antistatika, Stabilisatoren sowie Farbstoffe und Pigmente.

11. Zusammensetzungen gemäß Anspruch 1 bis 10 enthaltend als anorganisches Material Talk.

12. Zusammensetzungen gemäß Anspruch 11 enthaltend Talk hoher Reinheit mit einem Al₂O₃-Gehalt von ≤ 1 Gew.-% bezogen auf den Talk.

13. Zusammensetzungen gemäß Anspruch 11 enthaltend einen feinteiligen Talk mit einem mittleren Partikeldurchmesser d₅₀ ≤ 2,5 µm.

14. Zusammensetzungen gemäß Anspruch 1 bis 10 enthaltend als anorganisches Material ein feinteiliges Pulver mit einem mittleren Partikeldurchmesser ≤ 100 nm.

15. Polycarbonatformmassen gemäß einem oder mehreren der vorhergehenden Ansprüche, **dadurch gekennzeichnet, dass** sie den UL94V-Test mit der Bewertung V-0 bei einer Wandstärke ≤ 1,5 mm bestehen.

16. Polycarbonatformmassen gemäß einem oder mehreren der vorhergehenden Ansprüche, **dadurch gekennzeichnet, dass** der Gehalt an Chlor, Brom und Iod bezogen auf die Gesamtzusammensetzung ≤ 0,2 Gew.% beträgt.

17. Verwendung anorganischer Materialien zur Erhöhung der Schmelzeviskosität und Schmelzestabilität von chlor- und bromfreien, schlagzähmodifizierten Polycarbonatformmassen gemäß einem oder mehreren der vorhergehenden Ansprüche.

18. Verfahren zur Herstellung der Polycarbonatformmassen gemäß einem oder mehreren der vorhergehenden Ansprüche, wobei die einzelnen Komponenten gemischt und bei erhöhter Temperatur compoundiert werden.

19. Verwendung der Polycarbonatformmassen gemäß einem oder mehreren der vorhergehenden Ansprüche, zur Herstellung von Formkörpern bzw. Formteilen jeglicher Art.

20. Verwendung der Polycarbonatformmassen gemäß einem oder mehreren der vorhergehenden Ansprüche zur Herstellung von Profilen, Platten, Rohren und Kanälen im Extrusionsverfahren.

21. Formkörper bzw. Formteile sowie Profile, Platten, Rohre und Kanäle erhältlich aus den Polycarbonatformmassen gemäß einem oder mehreren der vorhergehenden Ansprüche.

## Claims

1. Compositions containing 70 - 95 wt.% of at least one aromatic polycarbonate, 4.67 - 10 wt.% of at least one graft polymer as impact modifier, and 2 - 15 wt.% of a bisphenol A-based oligophosphate as flame retardant, of the formula 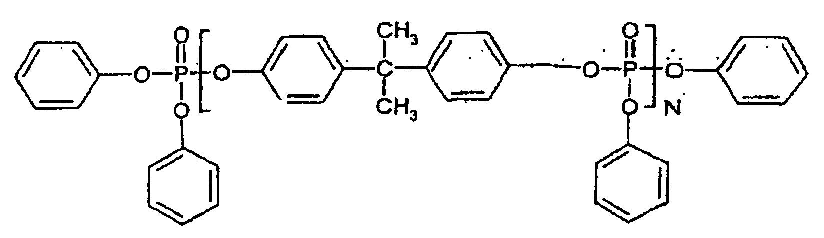 where N is between 1.1 and 5, in which the moulding compositions are **characterised by** the fact that they contain ≤ 0.1 wt.% of fluorine referred to the total composition.

2. Compositions according to claim 1 containing 0 to 5 wt.% of a particulate, flake-like or fibrous inorganic material, in which the sum of the percentages by weight of the components totals 100.

3. Compositions according to claim 1 containing 0 to 3 wt.% of a particulate, flake-like or fibrous inorganic material, in which the sum of the percentages by weight of the components totals 100.

4. Compositions according to claim 1 containing 0 to 1.5 wt.% of a particulate, flake-like or fibrous inorganic material, in which the sum of the percentages by weight of the components totals 100.

5. Compositions according to claims 1 to 4 containing in addition a fluorinated polyolefin, optionally employed as coagulate, pre-compound or master batch with a graft polymer or a vinyl (co)polymer, in an amount such that the fluorine content of the composition is ≤ 0.1 wt.%.

6. Compositions according to claims 1 to 5 containing in addition vinyl (co)polymers, polyalkylene terephthalates or mixtures thereof.

7. Compositions according to claims 1 to 6 containing, as impact modifier, one or more graft polymers of 5 to 95 wt.% of at least one vinyl monomer on 95 to 5 wt.% of at least one graft base with a glass transition temperature < 10°C.

8. Compositions according to claim 7 with graft polymers on a graft base of diene, EP(D)M, acrylate or silicone rubbers.

9. Compositions according to claim 7 containing an emulsion ABS or bulk ABS or mixtures thereof as impact modifier.

10. Compositions according to claims 1 to 9 containing further commercially available additives, such as for example further anti-drip agents, further flame retardants, lubricants and mould release agents, nucleating agents, antistatic agents, stabilisers as well as dyes and pigments.

11. Compositions according to claims 1 to 10 containing talcum as inorganic material.

12. Compositions according to claim 11 containing highly pure talcum with an Al₂O₃ content of ≤ 1 wt.% referred to the talcum.

13. Compositions according to claim 11 containing a finely particulate talcum with a mean particle diameter d₅₀ ≤ 2.5 µm.

14. Compositions according to claims 1 to 10 containing as inorganic material a finely particulate powder with a mean particle diameter ≤ 100 nm.

15. Polycarbonate moulding compositions according to one or more of the preceding claims, **characterised in that** they pass the UL94V test with the evaluation V-0 at a wall thickness ≤ 1.5 mm.

16. Polycarbonate moulding compositions according to one or more of the preceding claims, **characterised in that** the chlorine, bromine and iodine content is ≤ 0.2 wt.% referred to the total composition.

17. Use of inorganic materials to increase the melt viscosity and melt stability of chlorine-free and bromine-free, impact-modified polycarbonate moulding compositions according to one or more of the preceding claims.

18. Process for the production of the polycarbonate moulding compositions according to one or more of the preceding claims, in which the individual components are mixed and compounded at elevated temperature.

19. Use of the polycarbonate moulding compositions according to one or more of the preceding claims for the production of all types of moulded bodies and moulded parts.

20. Use of the polycarbonate moulding compositions according to one or more of the preceding claims for the production of profiled sections, sheets, tubes and ducting by the extrusion process.

21. Moulded bodies and moulded parts as well as profiled sections, sheets, tubes and ducting obtainable from the polycarbonate moulding compositions according to one or more of the preceding claims.

## Revendications

1. Compositions contenant 70-95% en poids d'au moins un polycarbonate aromatique, 4,67-10% en poids d'au moins un polymère greffé comme agent modifiant la résistance aux chocs et comme agent de protection contre les flammes, 2-15% en poids d'un oligophosphate à base de bisphénol A, de la formule : 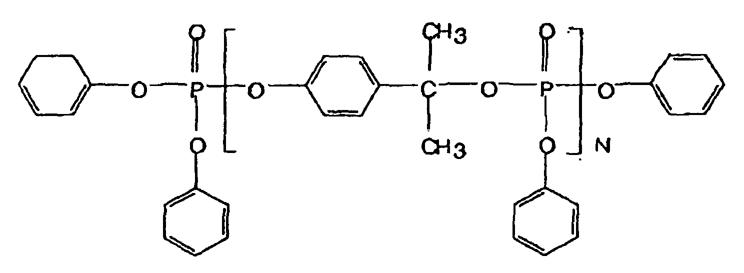 avec N allant de 1,1 à 5, où les matières de moulage sont **caractérisées en ce qu'**elles contiennent ≤ 0.1% en poids de fluor sur base de la composition totale.

2. Compositions selon la revendication 1, contenant 0 à 5% en poids d'un matériau inorganique en particules, en flocons ou en fibres, où la somme des % en poids des composants s'élève à 100.

3. Compositions selon la revendication 1, contenant 0 à 3% en poids d'un matériau inorganique en particules, en flocons ou en fibres, où la somme des % en poids des composants s'élève à 100.

4. Compositions selon la revendication 1. contenant 0 à 1,5% en poids d'un matériau inorganique en particules, en flocons ou en fibres, où la somme des % en poids des composants s'élève à 100.

5. Compositions selon les revendications 1 à 4, contenant en outre, une polyoléfine fluorée, mise en oeuvre le cas échéant comme coagulat, précomposé ("precompound") ou mélange-maître, avec un polymère greffé ou un (co)polymère vinylique, en une quantité telle que la teneur en fluor dans la composition s'élève à ≤ 0,1% en poids.

6. Compositions selon les revendications 1 à 5, contenant en outre, un (co)polymère vinylique, un poly(téréphtalate d'alkylène) ou leurs mélanges.

7. Compositions selon les revendications 1 à 6, contenant comme agent modifiant la résistance aux chocs, un ou plusieurs polymères greffés, constitués de 5 à 95% en poids d'au moins un monomère vinylique sur 95 à 5% en poids d'au moins une base de greffage avec une température de transition vitreuse < 10°C.

8. Compositions selon la revendication 7, avec des polymères greffés constitués d'une base en caoutchouc diène, EP(D)M, acrylate ou silicone.

9. Compositions selon la revendication 7, contenant un ABS en émulsion ou en masse ou des mléanges de ceux-ci comme agent modifiant la résistance aux chocs.

10. Compositions selon les revendications 1 à 9, contenant d'autres additifs commerciaux, comme par exemple un agent anti-gouttc, un autre agent de protection contre les flammes, des agents de lubrification interne et de démoulage, un agent de nucléation, un antistatique, des stabilisants ainsi que des colorants et pigments.

11. Compositions selon les revendications 1 à 10, contenant du talc comme matériau inorganique.

12. Compositions selon la revendication 11, contenant du talc de haute pureté avec une teneur en Al₂O₃ de ≤ 1% en poids par rapport au talc.

13. Compositions selon la revendication 11, contenant un talc finement divisé avec un diamètre moyen des particules d₅₀ ≤ 2, 5 µm.

14. Compositions selon les revendications 1 à 10, contenant comme matériau inorganique, une poudre finement divisée avec un diamètre moyen des particules ≤ 100 nm.

15. Matièrce de moulage de polycarbonate selon l'une ou plusieurs des revendications précédentes, **caractérisées en ce qu'**elles subsistent au test UL94V avec la valeur V-0 pour une épaisseur de paroi ≤ 1.5 mm.

16. Matières de moulage de polycarbonate selon l'une ou plusieurs des revendications précédentes, **caractérisées en ce que** la teneur en chlore, brome ou iode se situe à ≤ 0,2% en poids, sur base de la composition totale.

17. Utilisation de matériaux organiques pour augmenter la viscosité à l'état fondu et la stabilité à l'état fondu de matières de moulage de polycarbonate, modifiées pour une résistance élevée aux chocs, exemptes de chlore et de brome, selon une ou plusieurs des revendications précédentes.

18. Procédé de préparation de matières de moulage de polycarbonate selon l'une ou plusieurs des revendications précédentes, où les composants individuels sont mélangés et compoundés à température élevée.

19. Utilisation de matières de moulage de polycarbonate selon l'une ou plusieurs des revendications précédentes, pour la préparation d'articles moulés ou de pièces moulées de tout type.

20. Utilisation de matières de moulage de polycarbonate selon l'une ou plusieurs des revendications précédentes, pour la préparation de profils, plaques, tubes et canalisations dans un procédé d'extrusion.

21. Articles moulés ou pièces moulées ainsi que profils, plaques, tubes et canalisations, pouvant être obtenus à partir des matières de moulage de polycarbonate selon l'une ou plusieurs des revendications précédentes.
